(19) Europäisches Patentamt
European Patent Office
Office européen des brevets

(11) **EP 2 911 144 B1**

(12) **EUROPEAN PATENT SPECIFICATION**

(45) Date of publication and mention
of the grant of the patent:
**11.10.2017 Bulletin 2017/41**

(51) Int Cl.:
*G09G 3/20* (2006.01)  *G09G 3/34* (2006.01)
*H02J 7/00* (2006.01)

(21) Application number: **15156126.3**

(22) Date of filing: **23.02.2015**

(54) **Display apparatus and display control method**

Anzeigevorrichtung und Anzeigesteuerverfahren

Appareil d'affichage et procédé de commande dudit affichage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2014 JP 2014032442
02.10.2014 JP 2014203561**

(43) Date of publication of application:
**26.08.2015 Bulletin 2015/35**

(73) Proprietor: **Alpine Electronics, Inc.
Tokyo (JP)**

(72) Inventors:
• **Kitamura, Kazuhiro**
**Iwaki, Fukushima 970-1192 (JP)**
• **Okada, Hiroki**
**Iwaki, Fukushima 970-1192 (JP)**

(74) Representative: **Schmitt-Nilson Schraud Waibel
Wohlfrom
Patentanwälte Partnerschaft mbB
Destouchesstraße 68
80796 München (DE)**

(56) References cited:
**WO-A1-2005/004100    US-A1- 2003 001 815
US-A1- 2014 009 376**

**Description**

The present invention relates to a display apparatus including light emitting devices to be subjected to current drive control, and particularly to drive control of a backlight of a liquid crystal display or the like.

To reduce exhaust gas and save fuel, vehicles that perform engine control in which engines are stopped when they idle have been widely used. For example, engine control is performed in which, while a vehicle is waiting for the traffic light to change at an intersection, an engine is automatically stopped, and then, when an accelerator is pressed, the engine is automatically restarted.

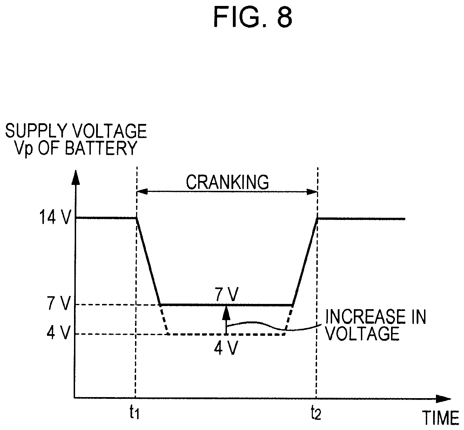

In an idle-stop vehicle, in the case where an engine is restarted, a motor is started by using power of a battery so as to perform cranking. Thus, a relatively large amount of power is consumed when the motor is started, and a voltage supplied from the battery is temporarily reduced. Fig. 8 is a graph illustrating changes in a supply voltage Vp from a battery when cranking is performed. When the engine has been stopped or when the engine is in a steady state, the supply voltage Vp of the battery is stable at, for example, about 14 V; however, in some cases, when cranking is performed, the supply voltage Vp is reduced to about 4 V. In the case where the supply voltage Vp is reduced to less than or equal to a certain level, the supply voltage Vp is increased to, for example, about 7 V by a booster circuit, and the operation of circuitry during that time is guaranteed. When the cranking is completed, the supply voltage Vp returns to a voltage of about 14 V.

On the other hand, devices that operate with power from the battery have a function of limiting current so as to prevent overcurrent due to a change in voltage. For example, JP 10-335999 A discloses a gate drive circuit having an overcurrent protection function of controlling a power element without increasing a switching cycle of the power element after an overcurrent has been detected. In addition, JP 59-57312 A discloses a current limiting circuit in which variations in current to be limited and a minimum voltage difference between input and output are reduced in a constant voltage power supply.

In an in-vehicle apparatus, a liquid crystal display is provided as a display apparatus that displays a road map, images, and the like. In the liquid crystal display, light emitting devices, such as light-emitting diodes (LEDs), are typically used as a backlight source, and, in the case where a supply voltage from a battery is reduced, drive control of a backlight is performed so as to guarantee operation.

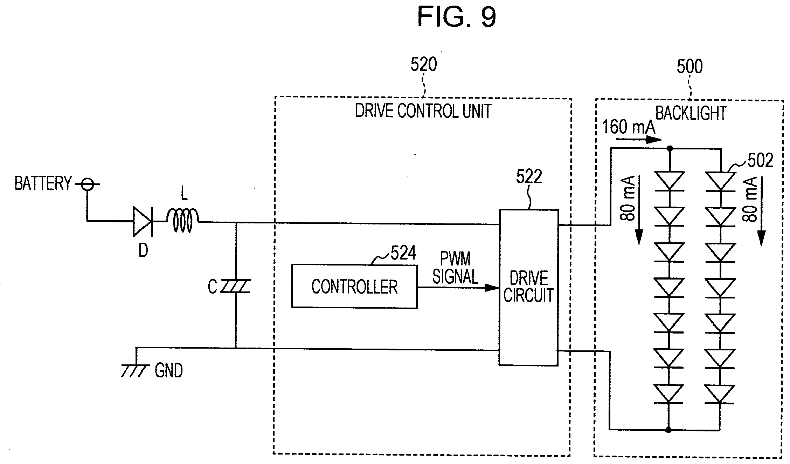

Fig. 9 illustrates existing backlight drive control. A backlight 500 is located behind a liquid crystal panel, and includes, for example, a plurality of LEDs 502 which are connected in series and parallel. A drive control unit 520 is connected between a battery and the backlight 500, the drive control unit 520 includes a drive circuit 522 that drives the backlight 500 with a constant current, and a controller 524 that controls the operation of the drive circuit 522. As for light emitting devices, such as the LEDs 502 constituting the backlight 500, because luminance and chromaticity are determined by a drive current, the drive circuit 522 typically supplies a constant current to the light emitting devices to stabilize luminance and chromaticity of the backlight 500. For example, the drive circuit 522 performs control so that a current of 80 mA is supplied to each line. The controller 524 provides a pulse width modulation (PWM) signal having a preset duty cycle to the drive circuit 522, and the drive circuit 522 determines a time period for which the LEDs 502 are on or off in accordance with the duty cycle contained in the PWM signal.

When a unit (for example, air conditioner) that consumes power rapidly, as typified by cranking, is activated, a supply voltage from the battery drops temporarily. For example, as described above, the supply voltage from the battery is reduced from 14 V to 7 V. In-vehicle products are required to be resistant to such a reduction in the supply voltage of the battery. However, in the existing backlight drive control, when the supply voltage from the battery is reduced, the drive circuit 522 draws a large amount of current from a primary side so as to output a constant current to the backlight 500, thereby resulting in a further drop in the supply voltage of the battery.

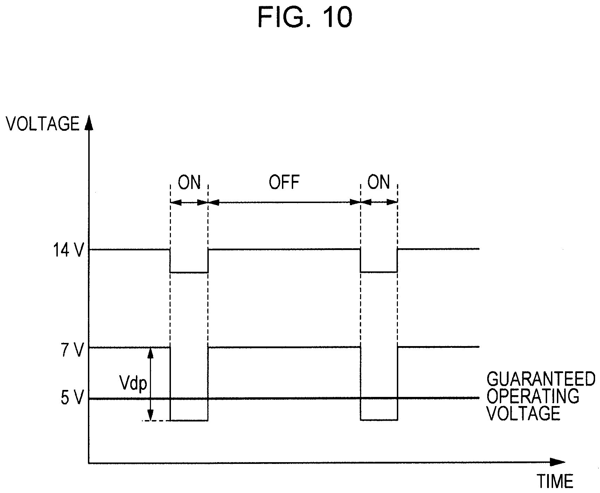

Fig. 10 is a graph illustrating a relationship between a supply voltage of the battery and the operation of the backlight. While a liquid crystal display is operating, much of power is consumed by the backlight 500. For this reason, a primary-side voltage of the drive circuit 522, that is, a supply voltage from the battery drops in such a way as to synchronize with a time period for which the backlight 500 is on. If the supply voltage from the battery is 14 V, a voltage drop when the backlight 500 is on does not matter. However, if the backlight 500 is activated when the supply voltage from the battery drops markedly upon starting of an engine or the like, an amount of voltage drop Vdp becomes quite large due to current consumed in the backlight 500. If the supply voltage falls below a guaranteed operating voltage of 5 V of the drive circuit 522, the drive circuit 522 is turned off for circuit protection, and a display operation performed by the liquid crystal display is actually discontinued.

An object of the present invention is to provide a display apparatus and a display control method that can extend a guaranteed operating voltage range when a voltage supplied from a battery is reduced.

Preferably, a further object of the present invention is to provide a display apparatus and a display control method that compensate for a reduction in luminance due to a reduction in consumption current.

The invention is related to a display apparatus according to the independent claims.

An aspect of the present invention provides a display apparatus that is capable of operating with power supplied from a battery. The display apparatus includes: detection means configured to detect whether or not a supply voltage from the battery is less than or equal to a threshold value; and drive means configured to supply a drive current to drive light emitting devices included in the display apparatus. The drive means includes current-changing means configured to change the drive current to be supplied to display means to a low current when the detection means detects that the supply voltage is less than or equal to the threshold value.

US 2014/009376 A1 discloses systems, methods, and apparatuses for controlling current in an electronic device which may involve sensing a first voltage representing a battery voltage. The first voltage can be compared to a cutoff voltage. A current may be provided to power a display based on the comparison of the first voltage with the cutoff voltage.

The drive means includes drive-time-period-changing means configured to change a duty cycle of the drive current specifying a time period for which the light emitting devices are on so that the duty cycle becomes large when the detection means detects that the supply voltage is less than or equal to the threshold value. The duty cycle is preferably changed in accordance with a low current value of the drive current. Preferably, a change in the drive current is made in synchronization with a change in the duty cycle. The current-changing means includes a variable resistance unit configured to be able to vary a resistance value in accordance with a detection result from the detection means. When the current-changing means changes a drive current Ia to a drive current Ib (Ib < Ia) and when the drive-time-period-changing means changes a duty cycle Da to a duty cycle Db, a relationship of $Ia/Ib = Db/Da$ is preferably satisfied. Preferably, the drive-time-period-changing means has, in advance, information specifying a plurality of duty cycles, and selects a duty cycle in accordance with a detection result from the detection means. Preferably, the information specifying the plurality of duty cycles is associated with drive currents, and the drive-time-period-changing means selects a duty cycle corresponding to a drive current supplied from the drive means. Preferably, the current-changing means has, in advance, information for setting a plurality of resistance values, and selects a resistance value in accordance with a detection result from the detection means. Preferably, the current-changing means includes a switch configured to be opened or closed in accordance with a detection result from the detection means, and a resistance connected to the switch, and the current-changing means is able to vary a resistance in accordance with opening or closing of the switch. The light emitting devices preferably act as a backlight for a liquid crystal display.

Furthermore, the display apparatus according to the aspect of the present invention may be an electronic apparatus installed in a vehicle, and the vehicle is a vehicle having an idle-stop function.

Another aspect of the present invention provides a display apparatus that is capable of operating with power supplied from a battery. The display apparatus includes: drive means configured to supply a drive current to drive light emitting devices included in the display apparatus; processing means configured to process image data; display means configured to display the image data processed by the processing means; and determination means configured to determine whether or not a duty cycle of the drive current supplied by the drive means exceeds an upper limit value. The processing means includes luminance component correction means configured to correct a luminance component of the image data when the determination means determines that the duty cycle exceeds the upper limit value. Preferably, the display apparatus further includes calculation means configured to calculate a correction amount for correcting the luminance component of the image data when the determination means determines that the duty cycle exceeds the upper limit value, and the luminance component correction means corrects the luminance component in accordance with the correction amount calculated by the calculation means. Preferably, the processing means includes gamma value correction means configured to correct a gamma value of the image data, and the gamma value correction means corrects the gamma value when a luminance component correction made by the luminance component correction means is more than or equal to a reference value. Preferably, the display apparatus further includes detection means configured to detect whether or not a supply voltage from the battery is less than or equal to a threshold value, and the drive means includes current-changing means configured to change the drive current of the drive means to a low current when the detection means detects that the supply voltage is less than or equal to the threshold value, and setting means configured to set the duty cycle of the drive current in accordance with a current changed by the current-changing means.

According to the present invention, when a supply voltage from a battery becomes less than or equal to a threshold value, a drive current to be supplied to light emitting devices of a display apparatus is changed to a low current value, and the consumption current of the display apparatus is therefore reduced, thereby reducing an amount of voltage drop of the supply voltage of the battery. As a result, the supply voltage is prevented from dropping below a guaranteed operating voltage, and thus a guaranteed operating voltage range of the display apparatus may be extended more than ever before. On the other hand, a reduction in luminance of the light emitting devices due to a reduction in drive current is compensated for by extending a time period for which the light emitting devices are on, and thus this may make it difficult for a user to recognize a temporary reduction in luminance. In addition, even when a duty cycle exceeds an upper limit value, a luminance component or the like of image data is corrected, and thus this makes it difficult for the user to recognize a temporary reduction in luminance.

BRIEF DESCRIPTION OF THE DRAWINGS

Fig. 1 illustrates the configuration of an in-vehicle apparatus according to embodiments of the present invention;

Fig. 2 illustrates a drive control circuit of a backlight according to a first embodiment of the present invention;

Fig. 3 is a waveform diagram illustrating an exemplary behavior of a battery supply voltage exhibited when an engine is started;

Figs. 4A and 4B illustrate an example of the internal configuration of a drive circuit according to the first embodiment;

Fig. 5 illustrates an example of a table specifying a relationship between a detection signal and a duty cycle held in a controller;

Fig. 6A illustrates a desired relationship between a drive current and a duty cycle, and Fig. 6B illustrates changes in a battery supply voltage and points in time when switching between drive currents and switching between duty cycles are performed according to respective embodiments;

Fig. 7A illustrates a voltage waveform representing existing drive control performed when a battery supply voltage drops, Fig. 7B illustrates a voltage waveform representing low-current control according to this embodiment performed when a battery supply voltage drops, and Fig. 7C illustrates a voltage waveform representing low-current control and PWM control for luminance correction according to this embodiment performed when a battery supply voltage drops;

Fig. 8 is a graph illustrating changes in a battery supply voltage when an engine is restarted;

Fig. 9 illustrates existing backlight drive control;

Fig. 10 is a graph illustrating a drop in a supply voltage from a battery due to existing backlight driving;

Fig. 11 illustrates the configuration of a display unit according to a second embodiment of the present invention including an LCD drive circuit; and

Fig. 12 is a flowchart illustrating luminance correction and gamma correction of image data according to the second embodiment of the present invention.

DESCRIPTION OF EMBODIMENTS

Next, embodiments of the present invention will be described with reference to the drawings. Preferably, a display apparatus according to the present invention is implemented in a form in which it is connected to an electronic apparatus installed in a vehicle or is incorporated into the electronic apparatus. The display apparatus according to the present invention is capable of operating with power supplied from a battery, and is subjected to drive control in accordance with a result obtained by monitoring a voltage supplied from the battery. The display apparatus according to the present invention is a display apparatus having a light source implemented by driving a plurality of light emitting devices with a current, for example, a liquid crystal display having an LED backlight source. The present invention will be described below with reference to the drawings.

Embodiments

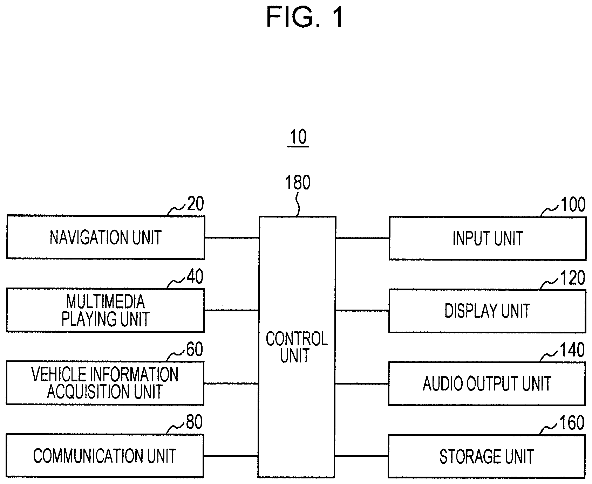

As an example of the display apparatus according to the embodiments of the present invention, a liquid crystal display installed in an in-vehicle apparatus is given. Fig. 1 is a block diagram illustrating an example of a typical in-vehicle apparatus. An in-vehicle apparatus 10 includes a navigation unit 20 that has a navigation function of providing guidance on a route to a destination, a multimedia playing unit 40 that plays images and audio data which are stored in a digital versatile disc (DVD), a Blu-ray Disc, a hard disk drive, and the like, a vehicle information acquisition unit 60 that acquires information on a vehicle, a communication unit 80 that performs wired or wireless data communication with an external apparatus or the like, an input unit 100 that receives an instruction from a user, a display unit 120 that has a liquid crystal display for displaying images, an audio output unit 140 that outputs audio from a speaker, a storage unit 160 that stores a program, data, and the like, and a control unit 180 that controls each unit. Preferably, the control unit 180 includes a microcontroller, a microprocessor, or the like, and is capable of executing a program stored in the storage unit 160 to thereby control an operation performed by each unit.

As described above, the display unit 120 includes the liquid crystal display, and the liquid crystal display has a liquid crystal panel and a backlight acting as a light source thereof. In the embodiments, as described below, the in-vehicle apparatus 10 monitors a supply voltage Vp from a battery, and performs drive control in which the consumption current of the backlight of the display unit 120 is reduced when the supply voltage Vp drops to less than or equal to a certain level.

Power consumption caused by performing cranking when an engine is started is a typical factor in a temporary reduction in the supply voltage Vp from the battery. Such cranking frequently occurs in idle-stop vehicles. However, it is noted that the factor in a reduction in the supply voltage Vp from the battery is not limited to this, and such a reduction may also occur when an air conditioner or the like that requires a measurable amount of power is activated.

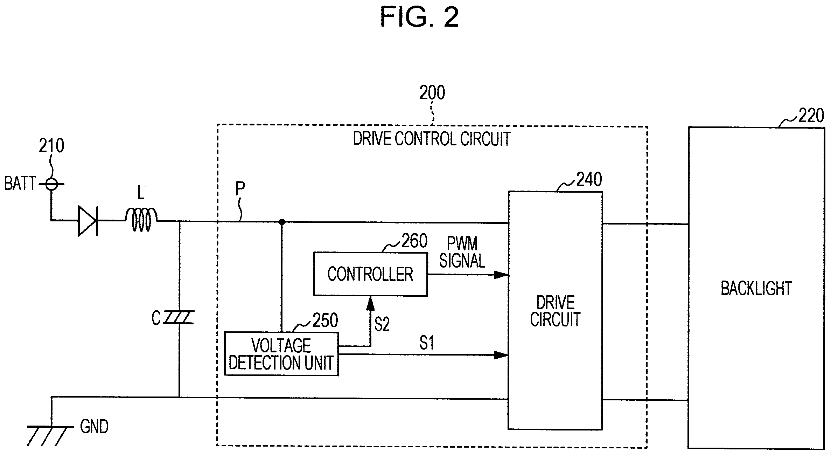

Next, display control of the display unit 120 according to a first embodiment will be described. Fig. 2 illustrates a drive control circuit of the backlight provided in the display unit 120 according to this embodiment. A diode, and a power-supply filter composed of a coil L and a capacitor C are connected to a power-supply line P of a battery 210, and a drive control circuit 200 is connected to the power-supply line P via the power-supply filter. The drive control circuit 200 includes a drive circuit 240 that drives a backlight 220 with a current, a voltage detection unit 250 that detects whether or not a supply voltage Vp of the power-supply line P from the battery 210 is less than or equal to a threshold value Vth, and a controller 260 that controls the operation of the drive circuit 240. As described in the related art in Fig. 9, the backlight 220 includes, for example, a plurality of LEDs which are connected in series and parallel.

The voltage detection unit 250 detects whether or not the supply voltage Vp from the battery 210 has reached the threshold value Vth. It is desirable to set the threshold value Vth to be as small as possible so that the display unit 120 loses as little a full display function as possible even when the supply voltage Vp from the battery 210 drops.

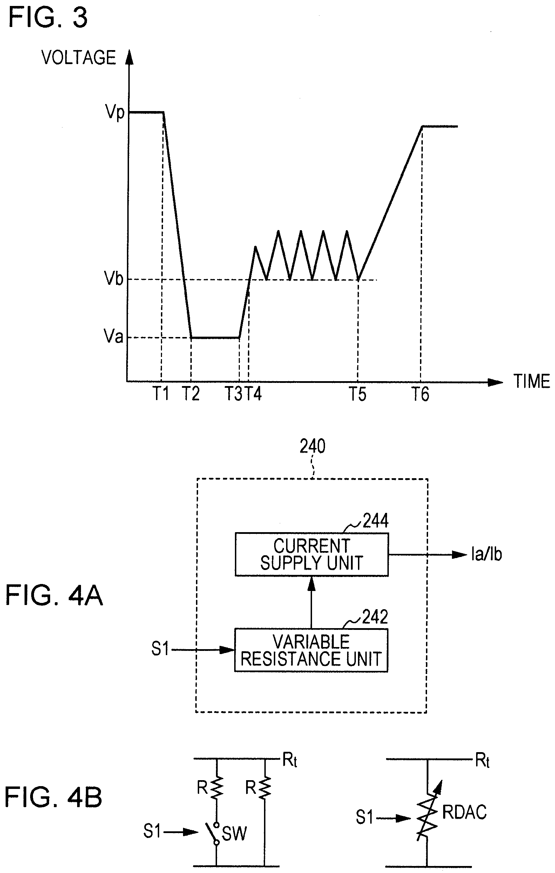

Fig. 3 is a graph illustrating a typical example of a supply voltage waveform of a battery when an engine is started or when cranking is performed. A supply voltage Vp from the battery is about 14 V. When cranking or the like occurs at a time T1, the supply voltage Vp rapidly drops to a voltage Va and remains until a time T3. Then, the voltage increases to a voltage Vb at a time T4, rises and falls to be unstable until a time T5, and returns to its original supply voltage Vp at a time T6. The voltages Va and Vb may be varied by an electronic device, an electronic circuit, or the like installed in an in-vehicle apparatus. If the voltage Va is below a guaranteed operating voltage of the drive circuit 240, the threshold value Vth is set to a value larger than the voltage Va. Alternatively, the threshold value Vth may be set to a value larger than the fluctuating voltage Vb.

When the voltage detection unit 250 detects that the supply voltage Vp has dropped to the threshold value Vth, the voltage detection unit 250 respectively provides detection signals S1 and S2 to the drive circuit 240 and the controller 260. When the drive circuit 240 receives the detection signal S1, the drive circuit 240 switches a drive current Ia to be supplied to the backlight 220 to a drive current Ib (Ia > Ib), and acts so as to drive the backlight 220 with a low current.

Fig. 4A illustrates an example of components included in the drive circuit 240. The drive circuit 240 includes a variable resistance unit 242 that can vary a resistance in response to the detection signal S1, and a current supply unit 244 that supplies a drive current Ia or Ib on the basis of a resistance set by the variable resistance unit 242. Fig. 4B illustrates an example of the variable resistance unit 242. The variable resistance unit 242 includes, for example, resistances Rs connected in parallel and a switch SW connected to one resistance R in series, and the switch SW is opened or closed in accordance with the detection signal S1. Thus, a resistance Rt that can be varied in accordance with the detection signal S1 is provided to the current supply unit 244.

In addition, in another example, a variable resistor RDAC may be a resistor that can vary a resistance value in accordance with a digital signal. For example, the variable resistance unit 242 may include a register that stores digital values for setting resistance values, read a digital value stored in the register on the basis of the detection signal S1 from the voltage detection unit 250, and set a resistance Rt of the variable resistor RDAC on the basis of this digital value. Alternatively, the voltage detection unit 250 may provide a digital signal for varying a resistance to the variable resistance unit 242 together with the detection signal S1.

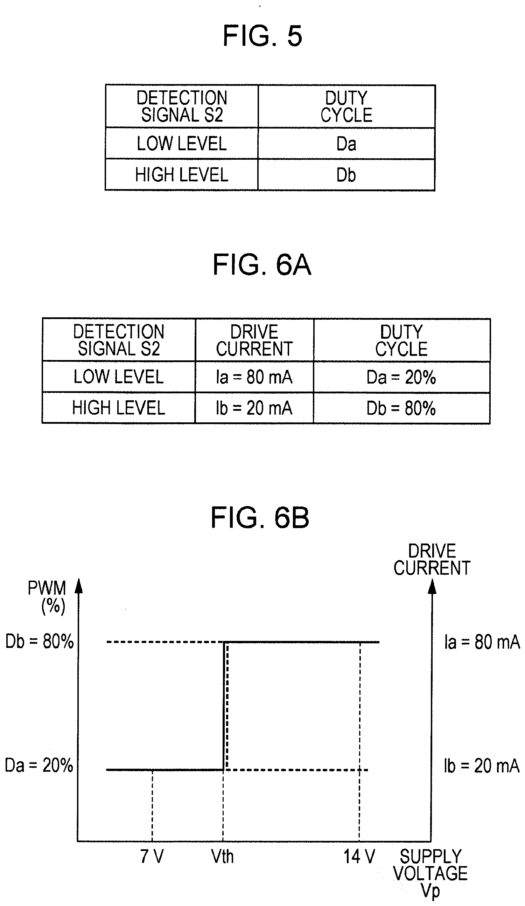

Furthermore, when the controller 260 receives the detection signal S2, the controller 260 switches a duty cycle Da contained in a PWM signal to be supplied to the drive circuit 240 to a duty cycle Db so as to cause the drive circuit 240 to change a time period for which the backlight 220 is on or off. In a preferred example, the controller 260 includes a table specifying a relationship between a detection signal and a duty cycle as illustrated in Fig. 5. When the supply voltage Vp is larger than the threshold value Vth, that is, when the controller 260 receives a high-level detection signal S2, the controller 260 provides a PWM signal having the duty cycle Da to the drive circuit 240. When the controller 260 receives a low-level detection signal S2, the controller 260 provides a PWM signal having the duty cycle Db.

As described above, when the supply voltage Vp of the battery 210 reaches less than or equal to the threshold value Vth, a drive current to be provided from the drive circuit 240 to the backlight 220 is reduced. That is, a drive current Ia is switched to a drive current Ib. This reduces the consumption current of the backlight 220, but on the other hand, reduces luminance of the LEDs. To compensate for this reduction in luminance, the controller 260 changes a duty cycle so as to extend a time period for which the LEDs are on. Suppose that Da and Db determine a time period for which the LEDs are on, in a preferred example, the relationship of Ib/Ia = Da/Db is satisfied. For example, when a drive current Ia = 80 mA is changed to a drive current Ib = 20 mA, a duty cycle Da = 20% is changed to a duty cycle Db = 80%. Fig. 6A illustrates relationships between the drive currents and the duty cycles. In addition, Fig. 6B illustrates changes in the supply voltage Vp and points in time when switching between the drive currents Ia/Ib and switching between the duty cycles Da/Db are performed. When the supply voltage Vp drops to the threshold value Vth, the drive current is reduced to a quarter. This reduces the luminance of the backlight 220 to a quarter, but a time period for which the backlight 220 is on quadruples, and thus a reduction in luminance may be substantially compensated for by the amount of light. It is noted that, if there is no margin to be able to set the above-described ratio (Ib/Ia = Da/Db), the relationship of Da < Db may simply be changed. Furthermore, the controller 260 may include a register that pre-stores a plurality of duty cycles, and select a duty cycle on the basis of the detection signal S2 from the voltage detection unit 250.

It is desirable that a point in time when the drive currents Ia/Ib are switched by the drive circuit 240 synchronizes with a point in time when the duty cycles Da/Db are switched by the controller 260. In Fig. 2, an example where the voltage detection unit 250 respectively provides detection signals S1 and S2 to the drive circuit 240 and the controller 260 is given; however, this embodiment is not limited to this. As long as two switching points in time are synchronized, a PWM signal and the detection signal S1 may be simultaneously provided to the drive circuit 240 in response to the fact that the controller 260 has received the detection signal S2. In addition, in the above example, an example where the drive control circuit 200 includes the controller 260 is given; alternatively, the function of the controller 260 may be performed by the control unit 180 illustrated in Fig. 1 instead of the controller 260. In this case, the control unit 180 provides a PWM signal to the display unit 120. Furthermore, in the above example, an example where the drive control circuit 200 includes the voltage detection unit 250 is given; alternatively, the drive control circuit 200 may use a detection result detected by another voltage detection unit. For example, the vehicle information acquisition unit 60 illustrated in Fig. 1 may acquire a detection result detected by the other voltage detection unit, and the control unit 180 may provide this detection result as detection signals S1 and S2 to the drive circuit 240 and the controller 260.

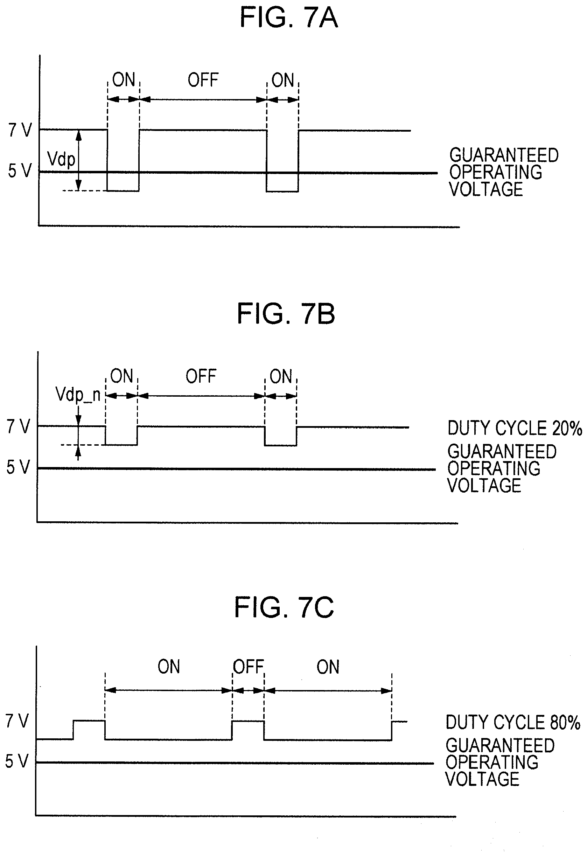

Next, drive control of the backlight 220 performed by the drive control circuit 200 according to this embodiment will be described. Figs. 7A to 7C are each a graph illustrating the drive operation of the backlight 220 during cranking. Here, as an example, assume that a guaranteed operating voltage of the drive circuit 240 is 5 V. In existing backlight drive control, as illustrated in Fig. 7A, even when a supply voltage Vp from the battery 210 drops to, for example, 7 V, constant-current driving is continuously performed without reducing a drive current. For this reason, the drive circuit 240 draws a larger amount of current from the battery 210 for a time period for which the backlight 220 is on, thereby increasing an amount of voltage drop Vdp of the supply voltage Vp. As a result, in some cases, the supply voltage Vp falls below the guaranteed operating voltage of the drive circuit 240, and the drive circuit 240 is stopped.

In contrast to this, in the drive control circuit 200 according to this embodiment, when a supply voltage Vp of the battery 210 is reduced to 7 V, a drive current supplied from the drive circuit 240 is changed to a low current value. For this reason, as illustrated in Fig. 7B, the consumption current of the drive circuit 240 is reduced for a time period for which the backlight 220 is on, thereby keeping an amount of voltage drop Vdp_n of the supply voltage Vp of the battery 210 low (Vdp_n < Vdp). This prevents the supply voltage Vp from falling below the guaranteed operating voltage of the drive circuit 240, thereby enabling extension of guaranteed operating voltage ranges of the drive circuit 240 and thus the display unit 120. When the supply voltage Vp becomes larger than the threshold value Vth, that is, when the voltage detection unit 250 does not detect a voltage drop, low-current drive control of the backlight 220 ends.

Fig. 7C illustrates an example where PWM control for luminance compensation is performed together with a reduction in the consumption current of the drive circuit 240. To compensate for a reduction in luminance of the backlight 220, the controller 260 changes a duty cycle from, for example, 20% to 80% in synchronization with a point in time when a drive current is switched to a low current. According to such drive control, when a current of the drive circuit 240 is reduced, PWM dimming is performed simultaneously with this reduction in current, and thus this may make it difficult for the user to recognize a reduction in luminance. As in the above, when a drop in the supply voltage Vp ends, PWM-based on-time control of the backlight 220 ends.

Next, a second embodiment of the present invention will be described. In the first embodiment, a reduction in supply voltage of the battery 210 to less than or equal to a threshold value triggers direct control of a current setting of the drive circuit 240 so as to reduce a consumption current, and also, when PWM dimming is performed, a PWM dimming value is caused to operate simultaneously with the reduction in the consumption current, thereby making it difficult for the user to recognize a reduction in luminance. In the control according to the first embodiment, for example, in the case where a duty cycle is large from the beginning, such as the case of the daytime, luminance correction exceeds an upper limit (100%), and it is likely to be difficult for duty control alone to perform sufficient luminance correction. Thus, in the second embodiment, there will be given an example where luminance component (hereinafter, referred to as Y component) correction and gamma correction are performed in addition to PWM control.

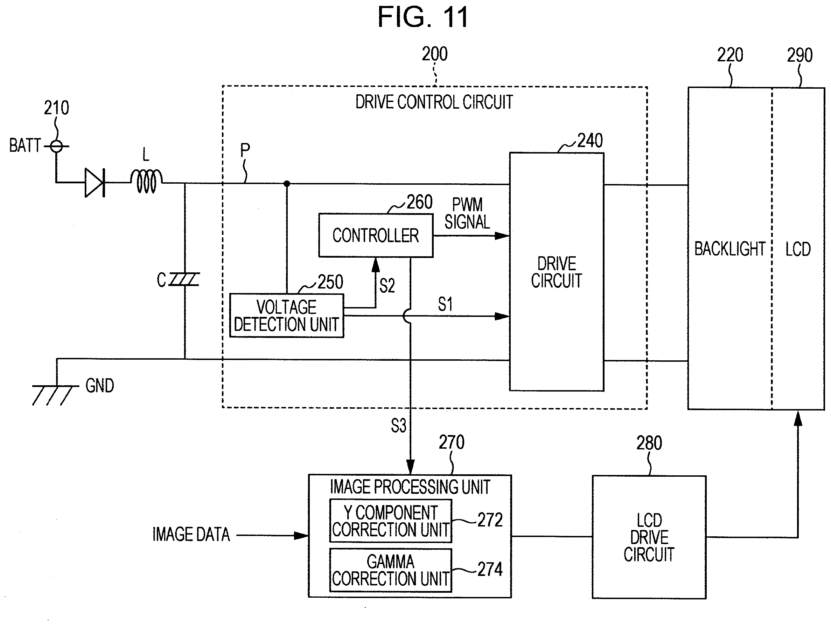

Fig. 11 illustrates the configuration of the display unit according to the second embodiment. In Fig. 11, components that are the same as those illustrated in Fig. 2 are denoted by the same reference numerals, and Fig. 11 illustrates, in addition to the components in Fig. 2, an image processing unit 270 that processes image data, an LCD drive circuit 280 that drives liquid crystal elements of an LCD panel in accordance with image data subjected to image processing, and an LCD display 290 that is illuminated by the backlight 220.

In this embodiment, the controller 260 determines whether or not a duty cycle exceeds an upper limit value (100%) due to low-current driving, and when the duty cycle exceeds the upper limit value, the controller 260 outputs a luminance correction signal S3 for correcting luminance of image data to the image processing unit 270. The image processing unit 270 receives image data to be displayed on the LCD display 290, and performs image processing required there on the image data. In one preferred form, the image processing unit 270 includes a Y component correction unit 272 that corrects the luminance of the image data on the basis of the luminance correction signal S3 from the controller 260. In addition, in another preferred form, the image processing unit 270 includes a gamma correction unit 274 that corrects gamma of the image data on the basis of the luminance correction signal S3 from the controller 260.

When the controller 260 receives, from the voltage detection unit 250, a detection signal S2 representing that a supply voltage Vp has dropped to a threshold value Vth, and changes a duty cycle, the controller 260 determines whether or not the duty cycle exceeds the upper limit value. Preferably, when a current set duty cycle varies on the basis of the ratio between drive currents Ia/Ib, it is determined whether or not the duty cycle exceeds 100%. For example, assume that the current set duty cycle is 40%, if the ratio between the drive currents Ia/Ib is 4, the duty cycle corresponding to the ratio between the drive currents is 40% x 4 = 160%, and it is determined that the duty cycle exceeds the upper limit value. If the ratio between the drive currents Ia/Ib is 2, the duty cycle corresponding to the ratio between the drive currents is 40% x 2 = 80%, and it is determined that the duty cycle does not exceed the upper limit value. In addition, even in the case where the duty cycle is changed without using the ratio between the drive currents Ia/Ib (for example, even in the case where the current set duty cycle is multiplied by a preset constant), as in the above, it is determined whether or not the duty cycle exceeds the upper limit value. Furthermore, in the above example, the upper limit value is set to a duty cycle of 100%; however, the upper limit value is not limited to this, and may be set to any other value instead of 100%.

When the controller 260 determines that the duty cycle exceeds the upper limit value, the controller 260 calculates a correction value for correcting a luminance component (Y component) of the image data, and outputs a luminance correction signal S3 including this correction value to the image processing unit 270. When the duty cycle exceeds the upper limit value, the controller 260 increases a luminance component of an image signal and thereby compensates for luminance which is unable to be corrected by the duty cycle. Preferably, the controller 260 corrects the original duty cycle into a Y component by an amount by which a duty cycle to be corrected exceeds 100%. Specifically, the controller 260 calculates a Y component correction ratio by using the following equation.

```
     Y component correction ratio = duty cycle to be corrected - upper limit value (100%)
```

The duty cycle to be corrected here is a duty cycle set on the basis of the ratio between the drive currents Ia/Ib. For example, when the current set duty cycle is 40% and the ratio between the drive currents Ia/Ib is 4, the duty cycle to be corrected is 160%, and thus the relationship of Y component correction ratio = 60% is obtained.

The controller 260 provides the luminance correction signal S3 including the Y component correction ratio to the image processing unit 270. Image data to be input to the image processing unit 270 may be in a red-green-blue (RGB) data format (examples of the format for a still image include graphics interchange format (GIF), portable network graphics (PNG), and the like, and examples of the format for a moving image include animated GIF, multiple-image network graphics (MNG), and the like), or YUV data format (an example of the format for a still image is Joint Photographic Experts Group (JPEG), and an example of the format for a moving image is Moving Picture Experts Group (MPEG)). Image data may be image data stored in the storage unit 160 of the in-vehicle apparatus 10, image data acquired from an external medium, such as a DVD, image data received from an external server, or the like, and a source of image data is not limited to particular sources.

When the image processing unit 270 receives the luminance correction signal S3, the image processing unit 270 corrects the luminance of the image data. If the input image data is RGB data, the RGB data is converted into YUV data, then a Y component is corrected, and then the data is reconverted into RGB data. Conversion equations of RGB data and YUV data are as follows.

```
     Y (luminance component) = 0.299R + 0.587G + 0.114B


     U (blue color difference component) = -0.169R - 0.331G

  + 0.500B


     V (red color difference component) = 0.500R - 0.419G -

  0.081B
```

$$R = Y + 1.40200 \times (V - 128)$$

$$G = Y - 0.34414 \times (U - 128) - 0.71414 \times (V - 128)$$

$$B = Y + 1.77200 \times (U - 128)$$

The Y component correction unit 272 of the image processing unit 270 corrects the Y component of the image data on the basis of the luminance correction signal S3. Specifically, the Y component is corrected by using the following equation.

```
Y component = original Y component × (1 + Y component
    correction ratio)
```

The image data whose Y component has been corrected by the image processing unit 270 is provided to the LCD drive circuit 280, and the LCD drive circuit 280 drives the liquid crystal of the LCD display 290 in accordance with the input image data. In this way, according to this embodiment, in the case where a duty cycle contained in a PWM signal exceeds the upper limit value, correction is performed so that a luminance component of image data is increased, and thus this may prevent the user from recognizing a reduction in luminance.

Next, a modification of the second embodiment of the present invention will be described. In this embodiment, the gamma correction unit 274 of the image processing unit 270 performs gamma correction on the image data whose Y component has been corrected. When R, G, and B image data is displayed on the LCD display 290, the brightness of the R, G, and B image data is not achieved exactly on the LCD display 290. An image is displayed brightly or darkly, that is, visibility varies depending on a display. In other words, even when the same color information is input, visibility varies in different devices to output image data. Gamma correction is correction in which such an inconsistency between input and output is corrected. In this embodiment, an intermediate tone of an image appearing whitish as a whole due to Y component correction is adjusted, and the image is corrected to become more visible.

In one form, the luminance correction signal S3 from the controller 260 is also provided to the gamma correction unit 274, and the gamma correction unit 274 determines, on the basis of the Y component correction ratio, whether or not the Y component of the image data is to be corrected to be more than or equal to a reference value. When a Y component correction is more than or equal to the reference value, the gamma correction unit 274 performs gamma correction on the basis of a predetermined mathematical expression or coefficient so as to darken the brightness of the image only in some degree.

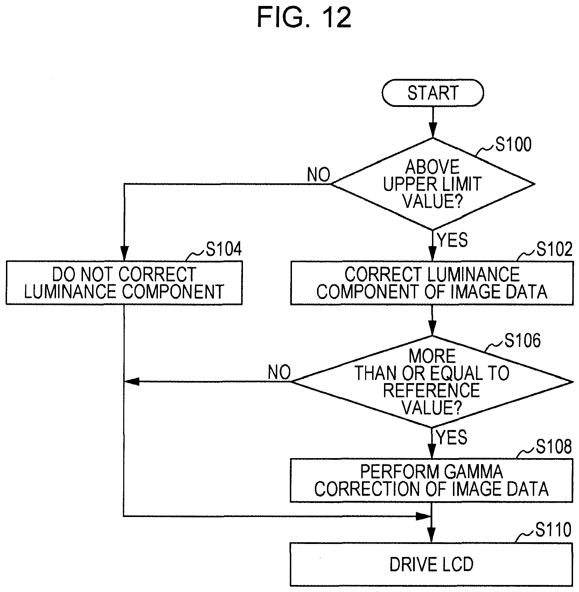

Next, Fig. 12 is a flowchart illustrating Y component correction and gamma correction operations according to this embodiment. As described in the first embodiment, in response to the fact that the voltage detection unit 250 has detected that a supply voltage Vp dropped to less than or equal to a threshold value Vth, a drive current of the backlight 220 is switched to a low current, and a duty cycle to correct luminance is also determined. The controller 260 determines whether or not the duty cycle exceeds an upper limit value (S100). When the duty cycle exceeds the upper limit value, as described above, a luminance correction signal S3 including a Y component correction ratio is provided to the image processing unit 270, and the Y component correction unit 272 corrects a Y component of image data (S102). When the duty cycle exceeds the upper limit value, the duty cycle is set as an upper limit value. On the other hand, when it is determined that the duty cycle does not exceed the upper limit value, the Y component of the image data is not corrected (S104), and the backlight 220 is driven in accordance with the determined duty cycle.

Subsequently, the gamma correction unit 274 determines whether or not the Y component correction ratio is more than or equal to a reference value (S106). When the Y component correction ratio is more than or equal to the reference value, the gamma correction unit 274 performs gamma correction so as to darken the brightness of the Y component of the image data (S108). When the Y component correction ratio is less than the reference value, gamma correction is not performed. Thus, the LCD display 290 is driven in accordance with the image data whose luminance component and/or gamma have been corrected (S110).

In the second embodiment, there is given an example where, when the voltage detection unit 250 detects that a battery supply voltage Vp has dropped to less than or equal to a threshold value, luminance correction and/or gamma correction of image data are performed. However, regardless of whether or not the battery supply voltage Vp drops to less than or equal to the threshold value, in the case where a duty cycle reaches an upper limit value when the controller 260 performs PWM control, a luminance component of the image data may be corrected. In this case as well, an amount by which the luminance component is corrected may be an amount corresponding to an amount by which the duty cycle exceeds the upper limit value.

In the above embodiments, an example where a drive circuit, a voltage detection unit, and a controller are separately provided is given; however, the embodiments are not limited to this. The drive circuit may include functions of the voltage detection unit and the controller therein. In addition, in the above embodiments, an example of an in-vehicle apparatus (display apparatus) installed in an idle-stop vehicle is given; alternatively, another in-vehicle apparatus (display apparatus) installed in an electric vehicle may be provided. Furthermore, an example where LEDs are used as a backlight source is given; however, the present invention is applicable to an in-vehicle apparatus (display apparatus) including, as a light source, other light emitting devices to be subjected to current drive control, for example, laser devices.

**Claims**

1. A display apparatus that is capable of operating with power supplied from a battery (210), the display apparatus comprising:

   a display unit (120) having a backlight as light source, the backlight comprising light emitting devices, detection means (250) configured to detect whether or not a supply voltage from the battery (210) is less than or equal to a threshold value; and
   drive means (200) configured to supply a drive current to drive the light emitting devices included in the display unit (120), wherein the drive means (200) includes current-changing means (240) configured to change the drive current to be supplied to display unit (120) from a first current (Ia) to a second current (Ib), which is lower than the first current, when the detection means (250) detects that the supply voltage is less than or equal to the threshold value, **characterized in that** the current-changing means (240) is arranged to change the current by means of a variable resistance unit (242) configured to vary a resistance value in accordance with a detection result from the detection means (250); and wherein the current-changing means further comprises a current supply unit (244) configured to supply the first or second drive currents (Ia, Ib) on the basis of the resistance value set by the variable resistance unit (242)
   and wherein the drive means (200) includes drive-time-period-changing means (260) configured to change a duty cycle of the drive current specifying a time period for which the drive current is to be supplied to the display unit (120) so that the light emitting devices are on so that the duty cycle becomes large when the detection means (250) detects that the supply voltage is less than or equal to the threshold value,
   the drive-time-period-changing means being arranged so that when the current-changing means (240) changes a drive current from the first drive current (Ia), denoted Ia, to the second drive current (Ib), denoted Ib, the drive-time-period-changing means (260) changes from a first duty cycle denoted Da to a second duty cycle denoted Db so that the relationship of Ia/Ib = Db/Da is satisfied.

2. The display apparatus according to Claim 1, wherein the drive-time-period-changing means (260) is configured to change the duty cycle in accordance with changing the drive current to be supplied to display means (120) from a first current (Ia) to a second current (Ib).

3. The display apparatus according to Claim 1 or 2, wherein the drive means (200) is configured to change the drive current in synchronization with a change in a duty cycle.

4. The display apparatus according to any one of Claims 1 to 3, wherein the drive-time-period-changing means (260) has, in advance, information specifying a plurality of duty cycles, and selects a duty cycle in accordance with a detection result from the detection means (250).

5. The display apparatus according to claim 4, wherein the information specifying the plurality of duty cycles is associated with drive currents, and the drive-time-period-changing means (260) selects a duty cycle corresponding to a drive current supplied from the drive means (200).

6. The display apparatus according to claim 5, wherein the current-changing means (240) has, in advance, information for setting a plurality of resistance values, and selects a resistance value in accordance with a detection result from the detection means (250).

7. The display apparatus according to claim 1 or 6, wherein the current-changing means (240) includes a switch configured to be opened or closed in accordance with a detection result from the detection means (250), and a resistance connected to the switch, and the current-changing means (240) is able to vary a resistance in accordance with opening or closing of the switch.

8.  The display apparatus according to any one of Claims 1 to 7 further comprising:

    processing means (270) configured to process image data;
    display means (120) configured to display the image data processed by the processing means (270); and
    determination means (260) configured to determine whether or not the duty cycle of the drive current to be supplied by the drive means (200) exceeds an upper limit value,
    wherein the processing means (270) includes luminance component correction means (272) configured to correct a luminance component of the image data when the determination means (260) determines that the duty cycle exceeds the upper limit value.

9.  The display apparatus according to Claim 8, further comprising calculation means (260) configured to calculate a correction amount for correcting the luminance component of the image data when the determination means (260) determines that the duty cycle exceeds the upper limit value,
    wherein the luminance component correction means (272) corrects the luminance component in accordance with the correction amount calculated by the calculation means (260).

10. The display apparatus according to Claim 8 or 9, wherein the processing means (270) includes gamma value correction means (274) configured to correct a gamma value of the image data, and the gamma value correction means (274) corrects the gamma value when a luminance component correction made by the luminance component correction means (272) is more than or equal to a reference value.


**Patentansprüche**

1.  Anzeigevorrichtung, die in der Lage ist, mit von einer Batterie (210) gelieferter Energie zu arbeiten, wobei die Anzeigevorrichtung Folgendes aufweist:

    eine Anzeigeeinheit (120) mit einer Hintergrundbeleuchtung als Lichtquelle, wobei die Hintergrundbeleuchtung lichtemittierende Vorrichtungen aufweist, eine Detektionseinrichtung (250), die dazu ausgebildet ist, zu detektieren, ob eine Versorgungsspannung von der Batterie (210) geringer als oder gleich einem Schwellwert ist oder nicht; und
    eine Ansteuereinrichtung (200), die dazu ausgebildet ist, einen Ansteuerstrom zum Ansteuern der in der Anzeigeeinheit (120) enthaltenen lichtemittierenden Vorrichtungen zu liefern,
    wobei die Ansteuereinrichtung (200) eine Stromänderungseinrichtung (240) aufweist, die dazu ausgebildet ist, den der Anzeigeeinheit (120) zuzuführenden Ansteuerstrom von einem ersten Strom (Ia) in einen zweiten Strom (Ib), der niedriger als der erste Strom ist, zu ändern, wenn die Detektionseinrichtung (250) feststellt, dass die Versorgungsspannung geringer als oder gleich dem Schwellenwert ist,
    **dadurch gekennzeichnet, dass** die Stromänderungseinrichtung (240) dazu ausgebildet ist, den Strom mittels einer variablen Widerstandseinheit (242) zu ändern, die zum Ändern eines Widerstandswerts in Abhängigkeit von einem Detektionsresultat von der Detektionseinrichtung (250) ausgebildet ist;
    und wobei die Stromänderungseinrichtung (240) ferner eine Stromversorgungseinheit (244) aufweist, die zum Zuführen des ersten oder des zweiten Ansteuerstroms (Ia, Ib) auf der Basis des von der variablen Widerstandseinheit (242) vorgegebenen Widerstandswerts ausgebildet ist, und
    wobei die Ansteuereinrichtung (200) eine Ansteuerungsdauer-Änderungseinrichtung (260) aufweist, die dazu ausgebildet ist, ein Tastverhältnis des Ansteuerstroms zu ändern, das eine Zeitdauer spezifiziert, für die der Anzeigeeinheit (120) der Ansteuerstrom zuzuführen ist, so dass die lichtemittierenden Vorrichtungen eingeschaltet sind und das Tastverhältnis groß wird, wenn die Detektionseinrichtung (250) feststellt, dass die Versorgungsspannung geringer als oder gleich dem Schwellenwert ist,
    wobei die Ansteuerungsdauer-Änderungseinrichtung derart ausgebildet ist, dass dann, wenn die Stromänderungseinrichtung (240) einen Ansteuerstrom von dem ersten Ansteuerstrom (Ia), der mit Ia bezeichnet ist, in den zweiten Ansteuerstrom (Ib), der mit Ib bezeichnet ist, ändert, die Ansteuerungsdauer-Änderungseinrichtung (260) von einem ersten Tastverhältnis, das mit Da bezeichnet ist, in ein zweites Tastverhältnis, das mit Db bezeichnet ist, wechselt, so dass die Bedingung Ia/Ib = Db/Da erfüllt ist.

**2.** Anzeigevorrichtung nach Anspruch 1,
wobei die Ansteuerungsdauer-Änderungseinrichtung (260) dazu ausgebildet ist, das Tastverhältnis in Abhängigkeit von einer Änderung des der Anzeigeeinrichtung (120) zuzuführenden Ansteuerstroms von einem ersten Strom (Ia) in einen zweiten Strom (Ib) zu ändern.

**3.** Anzeigevorrichtung nach Anspruch 1 oder 2,
wobei die Ansteuereinrichtung (200) dazu ausgebildet ist, den Ansteuerstrom synchron mit einer Änderung bei dem Tastverhältnis zu ändern.

**4.** Anzeigevorrichtung nach einem der Ansprüche 1 bis 3,
wobei die Ansteuerungsdauer-Änderungseinrichtung (260) vorab Information aufweist, die eine Mehrzahl von Tastverhältnissen spezifiziert, und ein Tastverhältnis in Abhängigkeit von einem Detektionsresultat von der Detektionseinrichtung (250) auswählt.

**5.** Anzeigevorrichtung nach Anspruch 4,
wobei die Information, die die Mehrzahl von Tastverhältnissen spezifiziert, Ansteuerströmen zugeordnet ist und die Ansteuerungsdauer-Änderungseinrichtung (260) ein Tastverhältnis entsprechend einem von der Ansteuereinrichtung (200) zugeführten Ansteuerstrom auswählt.

**6.** Anzeigevorrichtung nach Anspruch 5,
wobei die Stromänderungseinrichtung (240) vorab Information zum Vorgeben einer Vielzahl von Widerstandswerten aufweist und einen Widerstandswert in Abhängigkeit von einem Detektionsresultat von der Detektionseinrichtung (250) auswählt.

**7.** Anzeigevorrichtung nach Anspruch 1 oder 6,
wobei die Stromänderungseinrichtung (240) einen Schalter aufweist, der dazu ausgebildet ist, in Abhängigkeit von einem Detektionsresultat von der Detektionseinrichtung (250) geöffnet oder geschlossen zu werden, sowie einen mit dem Schalter verbundenen Widerstand aufweist, und wobei die Stromänderungseinrichtung (240) in der Lage ist, einen Widerstand in Abhängigkeit von dem Öffnen oder Schließen des Schalters zu ändern.

**8.** Anzeigevorrichtung nach einem der Ansprüche 1 bis 7,
weiterhin aufweisend:

eine Verarbeitungseinrichtung (270), die zum Verarbeiten von Bilddaten ausgebildet ist;
eine Anzeigeeinrichtung (120), die zum Anzeigen der von der Verarbeitungseinrichtung (270) verarbeiteten Bilddaten ausgebildet ist; und
eine Bestimmungseinrichtung (260), die dazu ausgebildet ist, festzustellen, ob ein Tastverhältnis des von der Ansteuereinrichtung (200) zuzuführenden Ansteuerstroms einen oberen Grenzwert überschreitet oder nicht, wobei die Verarbeitungseinrichtung (270) eine Helligkeitskomponenten-Korrektureinrichtung (272) aufweist, die dazu ausgebildet ist, eine Helligkeitskomponente der Bilddaten zu korrigieren, wenn die Bestimmungseinrichtung (260) feststellt, dass das Tastverhältnis den oberen Grenzwert überschreitet.

**9.** Anzeigevorrichtung nach Anspruch 8,
weiterhin aufweisend eine Berechnungseinrichtung (260), die dazu ausgebildet ist, einen Korrekturbetrag zum Korrigieren der Helligkeitskomponente der Bilddaten zu berechnen, wenn die Bestimmungseinrichtung (260) feststellt, dass das Tastverhältnis den oberen Grenzwert überschreitet, wobei die Helligkeitskomponenten-Korrektureinrichtung (272) die Helligkeitskomponente in Abhängigkeit von dem von der Berechnungseinrichtung (260) berechneten Korrekturbetrag korrigiert.

**10.** Anzeigevorrichtung nach Anspruch 8 oder 9,
wobei die Verarbeitungseinrichtung (270) eine Gammawert-Korrektureinrichtung (274) aufweist, die dazu ausgebildet ist, einen Gammawert der Bilddaten zu korrigieren, und wobei die Gammawert-Korrektureinrichtung (274) den Gammawert korrigiert, wenn eine von der Helligkeitskomponenten-Korrektureinrichtung (272) vorgenommene Helligkeitskomponenten-Korrektur größer als oder gleich einem Referenzwert ist.

**EP 2 911 144 B1**

**Revendications**

1. Appareil d'affichage pouvant fonctionner avec de l'électricité fournie par une batterie (210), l'appareil d'affichage comportant :

   une unité d'affichage (120) ayant un rétroéclairage comme source de lumière, le rétroéclairage comprenant des dispositifs luminescents,
   un moyen de détection (250) conçu pour détecter si, oui ou non, une tension d'alimentation fournie par la batterie (210) est inférieure ou égale à une valeur seuil ; et
   un moyen d'excitation (200) conçu pour fournir un courant d'excitation destiné à exciter les dispositifs luminescents présents dans l'unité d'affichage (120),
   le moyen d'excitation (200) comprenant un moyen de modification de courant (240) conçu pour modifier le courant d'excitation à fournir à l'unité d'affichage (120) en le faisant passer d'une première intensité (Ia) à une seconde intensité (Ib), inférieure à la première intensité, lorsque le moyen de détection (250) détecte que la tension d'alimentation est inférieure ou égale à la valeur seuil,
   **caractérisé en ce que** le moyen de modification de courant (240) est agencé pour modifier le courant à l'aide d'une unité à résistance variable (242) conçue pour modifier une valeur de résistance en fonction d'un résultat de détection fourni par le moyen de détection (250), et **en ce que** le moyen de modification de courant comprend en outre une unité d'alimentation en courant (244) conçue pour fournir le premier ou le second courant d'excitation (Ia, Ib) d'après la valeur de résistance établie par l'unité à résistance variable (242), et **en ce que** le moyen d'excitation (200) comprend un moyen de modification de durée d'excitation (260) conçu pour modifier un facteur d'utilisation du courant d'excitation en spécifiant une durée pendant laquelle le courant d'excitation doit être fourni à l'unité d'affichage (120) pour que les dispositifs luminescents soient allumés de façon que le facteur d'utilisation devienne élevé quand le moyen de détection (250) détecte que la tension d'alimentation est inférieure ou égale à la valeur seuil, le moyen de modification de durée d'excitation étant agencé de façon que lorsque le moyen de modification de courant (240) modifie un courant d'excitation en le faisant passer de la première intensité d'excitation (Ia), désignée par Ia, à la seconde intension d'excitation (Ib), désignée par Ib, le moyen de modification de durée d'excitation (260) passe d'un premier facteur d'utilisation désigné par Da à un second facteur d'utilisation désigné par Db de telle sorte que la relation Ia/Ib = Db/Da soit satisfaite.

2. Appareil d'affichage selon la revendication 1, dans lequel le moyen de modification de durée d'excitation (260) est conçu pour modifier le facteur d'utilisation en fonction de la modification du courant d'excitation à fournir à l'unité d'affichage (120), amené à passer d'une première intensité (Ia) à une seconde intensité (Ib).

3. Appareil d'affichage selon la revendication 1 ou 2, dans lequel le moyen d'excitation (200) est conçu pour modifier le courant d'excitation en synchronisation avec une modification d'un facteur d'utilisation.

4. Appareil d'affichage selon l'une quelconque des revendications 1 à 3, dans lequel le moyen de modification de durée d'excitation (260) dispose, par avance, d'informations spécifiant une pluralité de facteurs d'utilisation et sélectionne un facteur d'utilisation en fonction d'un résultat de détection fourni par le moyen de détection (250).

5. Appareil d'affichage selon la revendication 4, dans lequel les informations spécifiant la pluralité de facteurs d'utilisation sont associées à des courants d'excitation, et le moyen de modification de durée d'excitation (260) sélectionne un facteur d'utilisation correspondant à un courant d'excitation fourni par le moyen d'excitation (200).

6. Appareil d'affichage selon la revendication 5, dans lequel le moyen de modification de courant (240) dispose, par avance, d'informations pour établir une pluralité de valeurs de résistance et sélectionne une valeur de résistance en fonction d'un résultat de détection fourni par le moyen de détection (250).

7. Appareil d'affichage selon la revendication 1 ou 6, dans lequel le moyen de modification de courant (240) comprend un commutateur conçu pour être ouvert ou fermé en fonction d'un résultat de détection fourni par le moyen de détection (250), et une résistance connectée au commutateur, et le moyen de modification de courant (240) peut modifier une résistance en fonction de l'ouverture ou de la fermeture du commutateur.

8. Appareil d'affichage selon l'une quelconque des revendications 1 à 7, comportant en outre :

   un moyen de traitement (270) conçu pour traiter des données d'image ;
   un moyen d'affichage (120) conçu pour afficher les données d'image traitées par le moyen de traitement (270) ;

un moyen de détermination (260) conçu pour déterminer si, oui ou non, le facteur d'utilisation du courant d'excitation à fournir par le moyen d'excitation (200) dépasse une valeur limite supérieure,

le moyen de traitement (270) comprenant un moyen de correction de composante de luminance (272) conçu pour corriger une composante de luminance des données d'image lorsque le moyen de détermination (260) détermine que le facteur d'utilisation dépasse la valeur limite supérieure.

9. Appareil d'affichage selon la revendication 8, comportant en outre un moyen de calcul (260) conçu pour calculer une valeur de correction afin de corriger la composante de luminance des données d'image lorsque le moyen de détermination (260) détermine que le facteur d'utilisation dépasse la valeur limite supérieure,

le moyen de correction de composante de luminance (272) corrigeant la composante de luminance en fonction de la valeur de correction calculée par le moyen de calcul (260).

10. Appareil d'affichage selon la revendication 8 ou 9, dans lequel le moyen de traitement (270) comprend un moyen de correction de valeur de gamma (274) conçu pour corriger une valeur de gamma des données d'image, et le moyen de correction de valeur de gamma (274) corrige la valeur de gamma lorsqu'une correction de composante de luminance effectuée par le moyen de correction de composante de luminance (272) est supérieur ou égal à une valeur de référence.

# FIG. 1

<u>10</u>

180

| | |
|---|---|
| 20 — NAVIGATION UNIT | 100 — INPUT UNIT |
| 40 — MULTIMEDIA PLAYING UNIT | 120 — DISPLAY UNIT |
| 60 — VEHICLE INFORMATION ACQUISITION UNIT | 140 — AUDIO OUTPUT UNIT |
| 80 — COMMUNICATION UNIT | 160 — STORAGE UNIT |

CONTROL UNIT

FIG. 2

DRIVE CONTROL CIRCUIT 200

BATT 210

L

C

GND

P

DRIVE CIRCUIT 240

CONTROLLER 260

PWM SIGNAL

S2

S1

VOLTAGE DETECTION UNIT 250

BACKLIGHT 220

## FIG. 3

## FIG. 4A

## FIG. 4B

# FIG. 5

| DETECTION SIGNAL S2 | DUTY CYCLE |
|---|---|
| LOW LEVEL | Da |
| HIGH LEVEL | Db |

# FIG. 6A

| DETECTION SIGNAL S2 | DRIVE CURRENT | DUTY CYCLE |
|---|---|---|
| LOW LEVEL | la = 80 mA | Da = 20% |
| HIGH LEVEL | lb = 20 mA | Db = 80% |

# FIG. 6B

# FIG. 7A

7 V

Vdp

5 V

ON   OFF   ON

GUARANTEED
OPERATING
VOLTAGE

# FIG. 7B

Vdp_n

7 V

5 V

ON   OFF   ON

DUTY CYCLE 20%

GUARANTEED
OPERATING
VOLTAGE

# FIG. 7C

7 V

5 V

ON   OFF   ON

DUTY CYCLE 80%

GUARANTEED
OPERATING
VOLTAGE

# FIG. 8

# FIG. 9

EP 2 911 144 B1

# FIG. 10

# FIG. 11

EP 2 911 144 B1

# FIG. 12

START

~S100
ABOVE
UPPER LIMIT
VALUE?

NO

YES

~S104
DO NOT CORRECT
LUMINANCE COMPONENT

~S102
CORRECT LUMINANCE
COMPONENT OF IMAGE DATA

~S106
MORE
THAN OR EQUAL TO
REFERENCE
VALUE?

NO

YES

~S108
PERFORM GAMMA
CORRECTION OF IMAGE DATA

~S110
DRIVE LCD

## REFERENCES CITED IN THE DESCRIPTION

**Patent documents cited in the description**

- JP 10335999 A
- JP 59057312 A
- US 2014009376 A1